# EUROPEAN PATENT SPECIFICATION

(11) **EP 3 385 102 B1**
(45) Date of publication and mention of the grant of the patent: **27.11.2019**
(21) Application number: 18164953.4
(22) Date of filing: 29.03.2018
(51) Int. Cl.: B60J 11/04

(54) **COVER CLOTH FOR VEHICLES**
STOFFVERDECK FÜR FAHRZEUGE
TOILE DE COUVERTURE POUR VÉHICULES

(30) Priority: 03.04.2017 IT 201700036503
(43) Date of publication of application: 10.10.2018
(73) Proprietor: Confezioni Andrea Italia S.r.l., 21020 Bodio Lomnago (VA) (IT)
(72) Inventor: OTKY, Redouane, 21100 VARESE (IT)
(74) Representative: Biallo, Dario

(56) References cited:
- DE-A1-102005 024 424
- US-A1- 2002 113 458

## Description

The present invention relates to a cover cloth for vehicles such as, for example, motor vehicles, vans, lorries and so on.

Currently car manufacturers, distributors and dealers of spare parts have available various types of cover cloths for vehicles, adapted to be used for the purpose of protection against atmospheric events, vandalism and accidental impact; such accessories protect the outer finish and body of the parked car.

Such cover cloths are normally also used to preserve the cars during their movements, which must necessarily be performed to transport them from one place to another, e.g. for taking them from the production factory where they were manufactured to the final dealer. These movements typically take place by loading the cars onto articulated lorries, ferries and other means of transport and may take a long time before final delivery, depending on the distance between the manufacturing area and the place of delivery to the customer.

For such movements, cover cloths are commonly used that can substantially cover all the body of the vehicle with the exclusion of the wheels; these cover cloths may be made so as also to cover the windshield of the vehicle. It is possible that during the journey, the need arises to move the vehicle, e.g. from one trailer to another; in these cases, it is necessary to remove the cover cloth from the vehicle to allow access thereto and guarantee visibility through the windshield.

To avoid removing the entire cloth, cover cloths are known wherein the portion of cloth intended to cover the driver side door and the one intended to cover the windshield can be reversibly uncoupled from the rest of the related cloth.

With particular reference to the cover portion of the windshield, it is known to arrange a zipper there which, when open, allows the lifting of such portion and the consequent exposure of the windshield.

However, this solution suffers from the drawback that in order to open or close the zipper it is necessary to operate on the slider first on one side of the windshield and then on the other. This is very inconvenient and difficult for the operator, especially when we consider the case in which the vehicle is positioned on a loading plane of a transporter where it is not always possible to pass from one side to the other side of the vehicle considering the small walking space that may remain between the vehicle and the borders of the loading plane. In these cases, therefore, the operator is obliged to perform a first opening or closing step of the zipper bringing the slider up to the maximum point that can be reached by his arms, descend from the loading plane and then go back up on the opposite side to complete the opening or closing operation.

DE 10 2005 024 424 A1 discloses a cover for vehicle having partial covers comprising trimming areas where each area has a closure and is openable. A cable control arrangement is provided for opening and closing the closure for each trimming area.

US 2002/0113458 A1 discloses a protective cover for motor vehicles comprising partial covers for surfaces needed for visibility and partial covers for doors, said partial covers being adapted to be repeatedly opened and closed.

The object of the present invention is that of overcoming the above-mentioned drawbacks and in particular that of designing a cover cloth for vehicles provided with a cover portion for covering the windshield that can be coupled or partially uncoupled simply and easily.

This and other objects according to the present invention are obtained by making a cover cloth for vehicles as outlined in claim 1.

Further features of the cover cloth for vehicles are the subject matter of the dependent claims.

The features and advantages of a cover cloth for vehicles according to the present invention will be more apparent from the following description, which is to be understood as exemplifying and not limiting, with reference to the schematic attached drawings, wherein:
- figure 1 is a perspective schematic view of a cover cloth for vehicles according to the present invention applied on a motor vehicle with a zipper in the closed position;

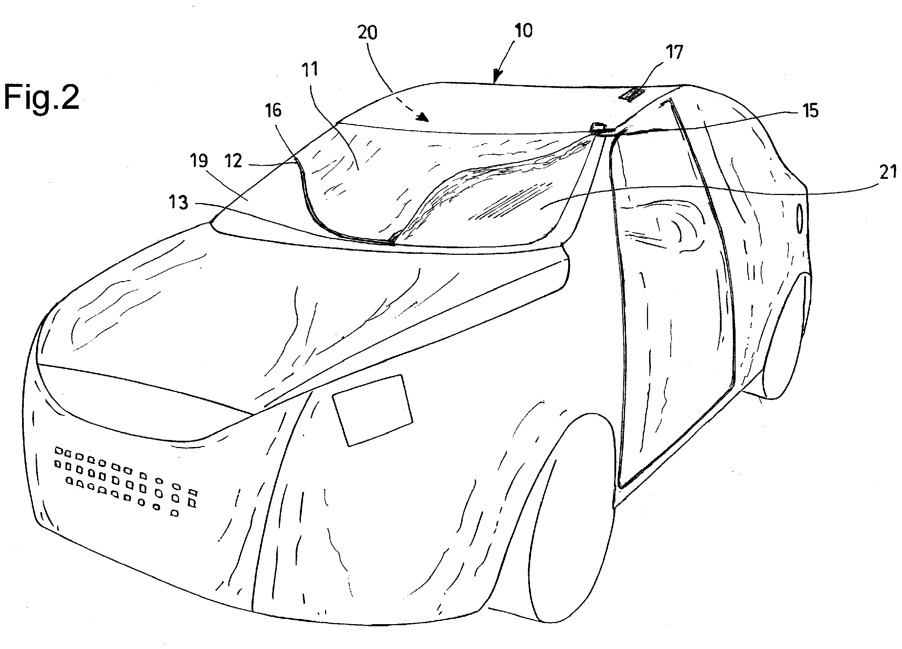

- figure 2 is a perspective schematic view of the cover cloth of figure 1 with the zipper in the partially open position;

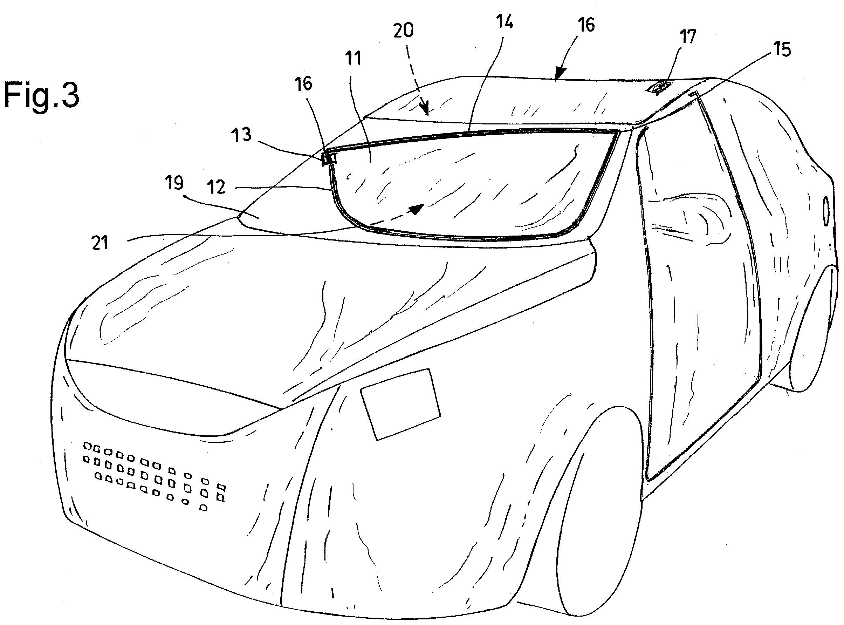

- figure 3 is a perspective schematic view of the cover cloth of figure 1 with the zipper in the open position and the cover portion for covering the windshield resting on the windshield;

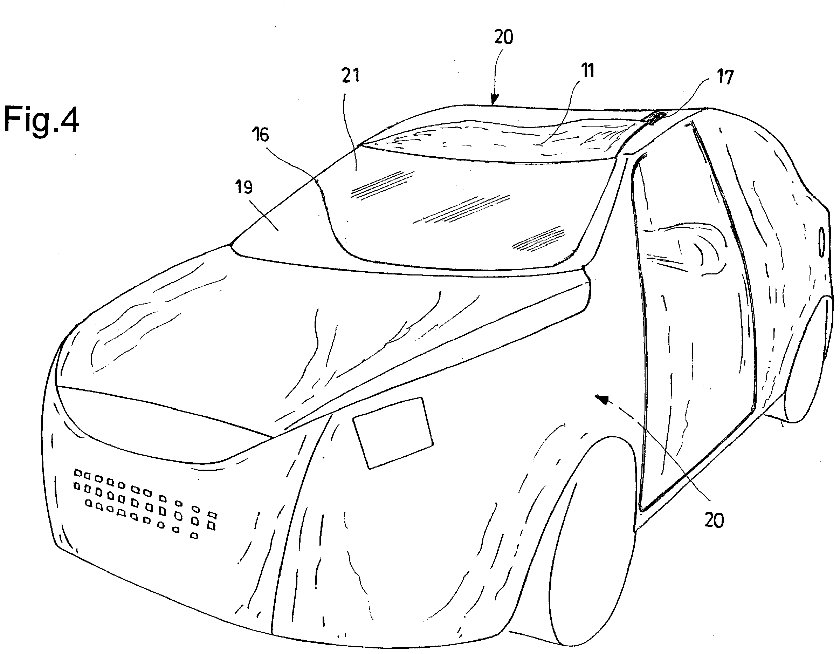

- figure 4 is a perspective schematic view of the cover cloth of figure 1 with the zipper in the open position and the cover portion for covering the windshield raised so as to uncover the windshield;
- figure 5 is a perspective schematic view of a second embodiment of the cover cloth for vehicles according to the present invention applied on a motor vehicle with a zipper in the closed position.

With reference to the figures, a cover cloth for vehicles is shown, indicated overall with number 10. Such cover cloth 10 is arranged to be anchored to a vehicle 20 so as to cover its body; in particular, the cover cloth 10 is provided with hooking elements (not shown) adapted to be engaged with relative hooking portions of the body. For example, the hooking elements may be plaques or elastic straps and so on.

The cover cloth 10 is, in particular, shaped to substantially completely cover the vehicle, only excluding the wheels.

The cover cloth 10 comprises a cover portion 11 for at least partially covering a windshield 21 of the vehicle 20 and a zipper 12 provided with an opening/closing slider 13 positioned and configured so that, when the cover cloth 10 is constrained to the vehicle 20 and the zipper 12 is open, the cover portion 11 for covering the windshield 21 is partially uncoupled from the rest of the cover cloth 10 and is partially removable so as to leave the windshield 21 at least partially uncovered.

In practice, when the zipper 12 is open, it allows the cover portion 11 for covering the windshield to be grasped in order to define a window in the cover cloth 10 at the windshield in order to ensure visibility through it.

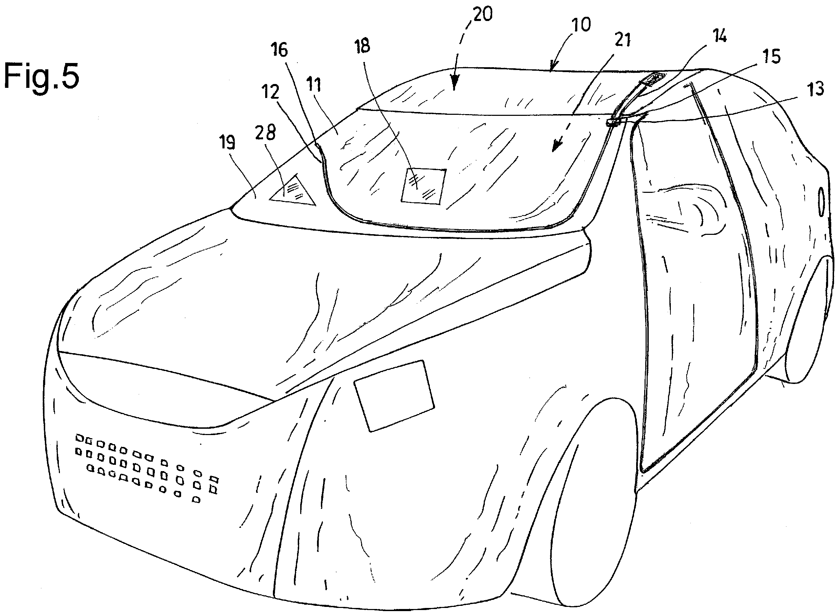

The cover portion 11 for covering the windshield may be entirely or partially made of opaque or transparent material; as illustrated in figure 5, the cover portion 11 is partially made of opaque material and has an area of transparent material 18.

According to an alternative, the cover portion 11 for covering the windshield may be entirely made of transparent material.

In the particular embodiments illustrated, the cover cloth 10 comprises an auxiliary cover portion 19 adapted to be connected to the cover portion 11 by means of the zipper 12 so as to substantially completely cover the windshield.

The auxiliary cover portion 19 may be entirely or partially made of opaque or transparent material; as illustrated in figure 5, the auxiliary cover portion 19 is partially made of opaque material and has an area of transparent material 28.

Alternatively, the auxiliary cover portion 19 for covering the windshield may be entirely made of transparent material.

According to the present invention, the cover cloth 10 comprises a flexible and manually graspable maneuvering element 14 for maneuvering the opening/closing slider 13, having a first end constrained to the cover cloth 10 and a second end constrained to the opening/closing slider 13.

The first end is, preferably, proximal with respect to the closing end stroke 15 of the opening/closing slider 13 and distal with respect to the opening end stroke 16 of the opening/closing slider 13.

The closing end stroke 15 corresponds to the end of the zipper 12 where the opening/closing slider 13 is positioned when the zipper 12 is completely closed.

Otherwise, the closing end stroke 16 corresponds to the end of the zipper 12 where the opening/closing slider 13 is positioned when the zipper 12 is completely open. Therefore, the first end of the maneuvering element 14 can be fixed to the cover cloth 10 so as to be closer to the closing end stroke 15 than to the opening end stroke 16.

In the embodiment illustrated in the figures, the first end of the maneuvering element 14 is constrained to the cover cloth 10 at the closing end stroke 15 of the opening/closing slider 13.

Preferably, the closing end stroke 15 of the opening/closing slider 13 is positioned at the driver side of the vehicle but it may also be positioned at the passenger side.

Preferably, the zipper 12 has no safety catch. This allows the zipper 12 to be opened by maneuvering the opening/closing slider 13 for a short stretch obtaining two opposite flaps of cloth uncoupled from each other and then subsequently manually widening these two flaps of cloth causing the translation of the opening/closing slider up to the respective opening end stroke 16. Preferably, the maneuvering element 14 has an elongated shape. In that case, the maneuvering element 14 is, preferably, tape-shaped.

Alternatively, the maneuvering element 14 may be rope-shaped. The maneuvering element 14 may be elastic. Preferably, the cover cloth 10 and the maneuvering element are provided with reciprocal anchoring elements 17 arranged to directly or indirectly anchor the maneuvering element 14 to the cover cloth 10.

In particular, such anchoring elements may comprise a Velcro® closing system.

In the embodiment illustrated, when the zipper 12 is closed, the tape-shaped maneuvering element 14 is refolded and anchored indirectly to the cover cloth 10 at the roof of the motor vehicle through a strap associated with the maneuvering element 14 which is coupled with a Velcro® band 17. Alternatively, if the maneuvering element is made with a material that can be coupled to the Velcro® band 17, it is possible to anchor the maneuvering element 14 directly to such Velcro® band 17.

According to a further alternative, the cover cloth 10 may be provided with a buttonhole to which it is possible to fix the strap of the maneuvering element 14. In any case, different possible reciprocal anchoring elements can be provided, for example also those based on adhesive bands.

The cover cloth 10, according to the present invention, is used in the following way.

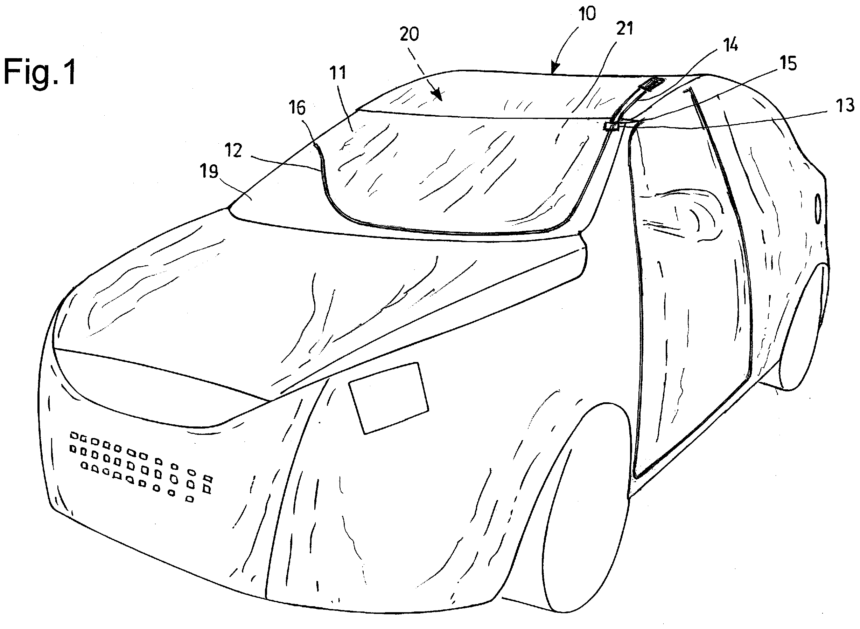

Let us consider the cover cloth 10 as being applied to a motor vehicle 20 with the zipper 12 closed and the maneuvering element 14 anchored to the cloth itself as shown in figure 1. The embodiment is considered in which the closing end stroke 15 is positioned at the driver side of the vehicle and in which the zipper 12 has no safety catch.

When the operator needs to move the motor vehicle 20 without removing the cover cloth 10 he must necessarily open the cloth itself at the windshield 21.

At this point, the operator releases the maneuvering element 14 and makes the opening/closing slider 13 slide along a stretch of zipper. Then he grasps the two free flaps obtained and widens them by making the opening/closing slider 13 slide up to the opening end stroke 16. At this point, the operator can lift the cover portion 11 for covering the windshield 21 and anchor it to the cover cloth 10 for example using the same Velcro® band 17.

After moving the vehicle into the desired position, the operator can, through the maneuvering element 14, easily close the zipper 12 in the same position from which he previously opened it. In fact, the operator grasps the maneuvering element 14 and pulls it making the opening/closing slider 13 slide towards the closing end stroke 15.

This is very advantageous when the vehicle is positioned in areas where it is not possible to transit easily from one side to the other of the vehicle, e.g. on the loading planes of trailers of trucks.

From the above description the features of the cover cloth object of the present invention, as well as the advantages thereof, are evident.

Finally, it is clear that the cover cloth as conceived herein is susceptible to many modifications and variations, all falling within the invention; furthermore, all the details are replaceable by technically equivalent elements. In practice, the materials used, as well as their dimensions, can be of any type according to the technical requirements.

## Claims

1. Cover cloth (10) for a vehicle (20) arranged to be anchored to said vehicle (20) so as to cover the body thereof, comprising a cover portion (11) for at least partially covering a windshield (21) of said vehicle (20) and a zipper (12) provided with an opening/closing slider (13) positioned and configured so that when said cover cloth (10) is constrained to said vehicle (20) and said zipper (12) is open, said cover portion (11) for covering the windshield (21) is partially uncoupled from the rest of the cover cloth (10) and is partially removable so as to leave the windshield (21) at least partially uncovered, said cover cloth (10) comprising a flexible and manually graspable maneuvering element (14) for maneuvering said opening/closing slider (13), **characterized in that** the flexible and manually graspable manoeuvring element (14) has a first end constrained to said cover cloth (10) and a second end constrained to said opening/closing slider (13) .

2. Cover cloth (10) according to claim 1, wherein said first end is proximal with respect to the closing end stroke (15) of said opening/closing slider (13) and distal with respect to the opening end stroke (16) of said opening/closing slider (13).

3. Cover cloth (10) according to claim 1 or 2, wherein said zipper (12) has no safety catch.

4. Cover cloth (10) according to one of the preceding claims, wherein said maneuvering element (14) has an elongated shape.

5. Cover cloth (10) according to claim 4, wherein said maneuvering element (14) is tape-shaped.

6. Cover cloth (10) according to one of the preceding claims, wherein said first end of said maneuvering element (14) is constrained to said cover cloth (10) at the closing end stroke (15) of said opening/closing slider (13).

7. Cover cloth (10) according to claim 6, wherein said closing end stroke (15) of said opening/closing slider (13) is positioned at the driver side of the vehicle.

8. Cover cloth (10) according to one of the preceding claims, wherein said cover cloth (10) and said maneuvering element (14) are provided with mutual anchoring elements (17) arranged to directly or indirectly anchor said maneuvering element (14) to said cover cloth (10).

9. Cover cloth (10) according to one of the preceding claims, wherein said cover portion (11) of the windshield is entirely or partially made of opaque or transparent material.

10. Cover cloth (10) according to one of the preceding claims, comprising an auxiliary cover portion (19) adapted to be connected to said cover portion (11) by means of said zipper (12), said auxiliary cover portion (19) being entirely or partially made of opaque or transparent material.

## Patentansprüche

1. Stoffverdeck (10) für ein Fahrzeug (20), das angeordnet ist, um an dem Fahrzeug (20) verankert zu werden, um dessen Karosserie abzudecken, umfassend ein Verdeckteil (11) zum zumindest teilweisen Abdecken einer Windschutzscheibe (21) des Fahrzeugs (20) und einen Reißverschluss (12), der mit einem Öffnungs- / Schließschieber (13) versehen ist, der so positioniert und konfiguriert ist, dass, wenn das Stoffverdeck (10) an das Fahrzeug (20) gebunden ist und der Reißverschluss (12) offen ist, das Verdeckteil (11) zum Abdecken der Windschutzscheibe (21) teilweise vom Rest des Stoffverdecks (10) losgelöst und teilweise entfernbar ist, um die Windschutzscheibe (21) zumindest teilweise unbedeckt zu lassen, wobei das Stoffverdeck (10) ein flexibles und manuell greifbares Manövrierelement (14) zum Manövrieren des Öffnungs- / Schließschiebers (13) umfasst, **dadurch gekennzeichnet, dass** das flexible und manuell greifbare Manövrierelement (14) ein an das Stoffverdeck (10) gebundenes erstes Ende und ein an den Öffnungs- / Schließschieber (13) gebundenes zweites Ende aufweist.

2. Stoffverdeck (10) nach Anspruch 1, wobei das erste Ende in Bezug auf den Schließendhub (15) des Öffnungs- / Schließschiebers (13) proximal und in Bezug auf den Öffnungsendhub (16) distal zum Öffnungs-/ Schließschieber (13) ist.

3. Stoffverdeck (10) nach Anspruch 1 oder 2, wobei der Reißverschluss (12) keine Sicherheitssperre aufweist.

4. Stoffverdeck (10) nach einem der vorhergehenden Ansprüche, wobei das Manövrierelement (14) eine längliche Form aufweist.

5. Stoffverdeck (10) nach Anspruch 4, wobei das Manövrierelement (14) bandförmig ist.

6. Stoffverdeck (10) nach einem der vorhergehenden Ansprüche, wobei das erste Ende des Manövrierelements (14) mit dem Schließendhub (15) des Öffnungs- / Schließschiebers (10) an das Stoffverdeck (10) gebunden ist (13).

7. Stoffverdeck (10) nach Anspruch 6, wobei der Schließendhub (15) des Öffnungs- / Schließschiebers (13) auf der Fahrerseite des Fahrzeugs positioniert ist.

8. Stoffverdeck (10) nach einem der vorhergehenden Ansprüche, wobei das Stoffverdeck (10) und das Manövrierelement (14) mit gegenseitigen Verankerungselementen (17) versehen sind, die angeordnet sind, um das Manövrierelement (14) direkt oder indirekt im Stoffverdeck (10) zu verankern.

9. Stoffverdeck (10) nach einem der vorhergehenden Ansprüche, wobei das Verdeckteil (11) der Windschutzscheibe ganz oder teilweise aus undurchsichtigem oder transparentem Material besteht.

10. Stoffverdeck (10) nach einem der vorhergehenden Ansprüche, umfassend ein Hilfsabdeckteil (19), das geeignet ist, mit dem Abdeckteil (11) mittels des Reißverschlusses (12) verbunden zu werden, wobei das Hilfsabdeckteil (19) ganz oder teilweise aus undurchsichtigem oder transparentem Material gefertigt ist.

## Revendications

1. Toile de couverture (10) pour un véhicule (20) agencée pour être ancrée audit véhicule (20) de manière à recouvrir le corps de ce dernier, comprenant une partie couverture (11) pour recouvrir au moins partiellement un pare-brise (21) dudit véhicule (20) et une fermeture à glissière (12) pourvue d'un coulisseau d'ouverture/fermeture (13) positionné et configuré de sorte que, lorsque ladite toile de couverture (10) est contrainte sur ledit véhicule (20) et que ladite fermeture à glissière (12) est ouverte, ladite partie couverture (11) pour recouvrir le pare-brise (21) est partiellement découplée du reste de la toile de couverture (10) et est partiellement amovible de manière à laisser le pare-brise (21) au moins partiellement découvert, ladite toile de couverture (10) comprenant un élément de manœuvre souple et pouvant être saisi manuellement (14) pour manœuvrer ledit coulisseau d'ouverture/fermeture (13), **caractérisée en ce que** l'élément de manœuvre souple et pouvant être saisi manuellement (14) a une première extrémité contrainte sur ladite toile de couverture (10) et une deuxième extrémité contrainte sur ledit coulisseau d'ouverture/fermeture (13).

2. Toile de couverture (10) selon la revendication 1, dans laquelle ladite première extrémité est proximale par rapport à la course d'extrémité de fermeture (15) dudit coulisseau d'ouverture/fermeture (13) et distale par rapport à la course d'extrémité d'ouverture (16) dudit coulisseau d'ouverture/fermeture (13).

3. Toile de couverture (10) selon la revendication 1 ou la revendication 2, dans laquelle ladite fermeture à glissière (12) n'a pas de cran de sûreté.

4. Toile de couverture (10) selon l'une des revendications précédentes, dans laquelle ledit élément de manœuvre (14) a une forme allongée.

5. Toile de couverture (10) selon la revendication 4, dans laquelle ledit élément de manœuvre (14) est en forme de ruban.

6. Toile de couverture (10) selon l'une des revendications précédentes, dans laquelle ladite première extrémité dudit élément de manœuvre (14) est contrainte sur ladite toile de couverture (10) au niveau de la course d'extrémité de fermeture (15) dudit coulisseau d'ouverture/fermeture (13).

7. Toile de couverture (10) selon la revendication 6, dans laquelle ladite course d'extrémité de fermeture (15) dudit coulisseau d'ouverture/fermeture (13) est positionnée au niveau du côté conducteur du véhicule.

8. Toile de couverture (10) selon l'une des revendications précédentes, dans laquelle ladite toile de couverture (10) et ledit élément de manœuvre (14) sont pourvus d'éléments d'ancrage mutuel (17) agencés pour ancrer directement ou indirectement ledit élément de manœuvre (14) à ladite toile de couverture (10).

9. Toile de couverture (10) selon l'une des revendications précédentes, dans laquelle ladite partie couverture (11) du pare-brise est entièrement ou partiellement faite d'un matériau opaque ou transparent.

10. Toile de couverture (10) selon l'une des revendications précédentes, comprenant une partie couverture auxiliaire (19) conçue pour être reliée à ladite partie couverture (11) au moyen de ladite fermeture à glissière (12), ladite partie couverture auxiliaire (19) étant entièrement ou partiellement faite d'un matériau opaque ou transparent.
